Europäisches Patentamt

European Patent Office

Office européen des brevets

(11) Veröffentlichungsnummer: **0 092 159
B1**

(12) **EUROPÄISCHE PATENTSCHRIFT**

(45) Veröffentlichungstag der Patentschrift:
**20.11.86**

(21) Anmeldenummer: **83103575.3**

(22) Anmeldetag: **13.04.83**

(51) Int. Cl.⁴: **C 02 F 3/12,** C 02 F 3/26,
C 02 F 3/10

(54) **Verfahren und Vorrichtung zur biologischen Reinigung von Abwasser.**

(30) Priorität: **15.04.82 DE 3213924**

(43) Veröffentlichungstag der Anmeldung:
**26.10.83 Patentblatt 83/43**

(45) Bekanntmachung des Hinweises auf die Patenterteilung:
**20.11.86 Patentblatt 86/47**

(84) Benannte Vertragsstaaten:
**AT CH DE FR GB IT LI NL SE**

(56) Entgegenhaltungen:
**GB - A - 2 096 908
US - A - 2 071 591**

(73) Patentinhaber: **Linde Aktiengesellschaft,
Abraham-Lincoln-Strasse 21, D-6200 Wiesbaden (DE)**

(72) Erfinder: **Frydman, Allen, Wilhelm-Busch-Strasse 18,
D-8000 München 71 (DE)**
Erfinder: **Fuchs, Uwe, Chem-Ing. grad., Helterwanger
Strasse 46, D-8000 München 70 (DE)**

(74) Vertreter: **Schaefer, Gerhard, Dr., Linde
Aktiengesellschaft Zentrale Patentabteilung,
D-8023 Höllriegelskreuth (DE)**

## Beschreibung

Die Erfindung betrifft eine Vorrichtung zur biologischen Reinigung von Abwasser mit einem Reaktor, der eine Zuleitung für zu behandelndes Abwasser, eine Ableitung für behandeltes Abwasser, eine Schlammzuleitung sowie mindestens eine Begasungseinrichtung aufweist und in dem die Biomasse auf einem Trägermaterial angesiedelt ist.

Beim herkömmlichen Belebtschlammverfahren wird das zu behandelnde Abwasser in einem als Belebungsbecken ausgebildeten Reaktor mit Belebtschlamm unter gleichzeitiger Zuführung von Sauerstoff vermischt. Durch die Tätigkeit der in dem Belebtschlamm enthaltenen aeroben Mikroorganismen werden die in gelöster oder kolloidaler Form vorliegenden organischen Schmutzstoffe des Abwassers zum Teil in Bakteriensubstanz umgewandelt und zum Teil mittels Sauerstoff im wesentlichen zu $CO_2$ und Wasser umgesetzt. In einer dem Belebungsbecken nachgeschalteten Nachklärung wird der Belebtschlamm meist durch Absetzen von gereinigtem Abwasser getrennt. Zumindest ein Teil des in der Nachklärung sedimentierten Schlamms wird zur Aufrechterhaltung einer gewünschten Schlammkonzentration im Belebungsbecken als Rücklaufschlamm wieder in das Belebungsbecken zurückgeleitet. Zur Erreichung einer weitgehenden Reinigung des Abwassers ist es dabei notwendig, im Belebungsbecken eine möglichst hohe Schlammkonzentration aufrechtzuerhalten. Wegen des nur begrenzten Eindickvermögens des Belebtschlamms lassen sich in einem herkömmlichen Belebungsbecken jedoch nur Schlammkonzentrationen von maximal 3 bis 8 g/l einstellen. Dies bedeutet aber, dass entsprechend viel Rücklaufschlamm in das Belebungsbecken zurückgeleitet werden muss, was viel Pumpenergie erfordert. Dazu kommt, dass bei einer hohen Schlammkonzentration im Belebungsbecken auch die Belastung in der Nachklärung entsprechend hoch ist, so dass die Nachklärbecken relativ gross dimensioniert werden müssen.

Zur Erhöhung der Konzentration an suspendierter Biomasse ohne gleichzeitig die Belastung der Nachklärung zu steigern ist deshalb bereits vorgeschlagen worden, in einem Belebungsbecken als Trägermaterial für die Mikroorganismen makroporöse Stoffteilchen, insbesondere aus Polyurethanschaumstoff, anzuordnen. Die Verwendung solcher Trägerteilchen für die Mikroorganismen bietet diesen eine grosse aktive Oberfläche zur Ansiedlung, wobei durch die Makroporen der Stoffteilchen die Bakterien zu einem dezentralisierten Wachstum gezwungen werden, wodurch sich dann eine wesentlich grössere Stoffaustauschfläche als bei herkömmlichen Belebtschlammflocken ergibt. Da ausserdem die durch die Abwasserinhaltsstoffe wachsenden Mikroorganismen fest in den Poren bis ins Innere der Stoffteilchen angesiedelt sind und diese leicht im Belebungsbecken zurückgehalten werden können, kann im Belebungsbecken eine sehr hohe Trockensubstanzkonzentration mit Werten über 15 g/l, die weit über der Trockensubstanzkonzentration der herkömmlichen Belebtschlammverfahren liegt, eingehalten werden, die zum einen eine entsprechend geringe Überschussschlammentfernung erfordert und zum anderen eine sehr hohe Belastbarkeit mit Abwasser oder umgekehrt ausgedrückt, eine geringe Aufenthaltszeit des Abwassers im Belebungsbecken verbunden mit einer Einsparung an Beckenvolumen ergibt. Die US-Patentschrift 2 071 591 beinhaltet ein Verfahren zur biologischen Reinigung von Abwasser in einem Belebungsbecken, bei dem die aeroben Mikroorganismen auf Trägerteilchen, bestehend aus Gummischwämmen oder natürlichen Schwämmen angesiedelt werden. Diese Trägerteilchen sollen frei beweglich im Abwasser schweben und sind in bevorzugter Weise nur in einem Teilbereich des Belebungsbeckens angeordnet. Zur Bildung dieses Bereiches ist eine Trennwand vorgesehen, die im unteren und im oberen Bereich Perforierungen für den Durchtritt der Wasserströmung aufweist. Als Belüftungseinrichtungen werden dabei entweder ausserhalb oder auch innerhalb des Trägerteilchen enthaltenden Teilbereichs Luftdiffusoren eingesetzt. Jedoch kann als Begasungseinrichtung hierfür nur die angesprochene Methode angewendet werden, da ansonsten Belastungsprobleme bezüglich der Trägerteilchen auftreten.

Ausser der Verwendung von Trägermaterialien für die Biomasse in Belebungsbecken ist es ebenso möglich, solche Trägermaterialien in Umlaufgräben oder in Festbett- oder Wirbelbettreaktoren einzusetzen. Zur Begasung ist es üblich, Luft, ein Luft-Sauerstoffgemisch oder weitgehend reinen Sauerstoff in das Abwasser-Belebtschlammgemisch einzutragen. Insbesondere bei Verwendung von Polyurethanschaumstoff als Trägermaterial kann die Begasung in vielen Fällen jedoch nur mit Hilfe von Ausströmern, Filterkerzen, oder Fritten durchgeführt werden, da auch mechanisch arbeitende Belüfter sowie Oberflächenbelüfter oder Ejektoren, die Gefahr einer tatsächlichen Zerstörung des Trägermaterials durch hohe Scherkräfte, die dessen Festigkeit vermindern, mit sich tragen. Somit fehlt die notwendige Einrichtung, die Trägerteilchen von der Einlaufzone mechanischer Belüftungseinrichtungen fernzuhalten und gleichzeitig den Trägerteilchen ein genügend grosses Volumen zur freien Bewegung zur Verfügung zu stellen.

Der Erfindung liegt deshalb die Aufgabe zugrunde, ein Verfahren der eingangs genannten Art sowie eine Vorrichtung zur Durchführung des Verfahrens so auszugestalten, dass auf einfache und wirtschaftliche Weise, insbesondere bei Anwendung von Polyurethanschaumstoff als Trägermaterial eine Zerstörung der Trägerteilchen unabhängig von der Begasungsart mit Sicherheit vermieden wird und damit bestehende Abwasserreinigungsanlagen durch den Einsatz von Trägerteilchen für die Biomasse saniert werden können.

Diese Aufgabe wird erfindungsgemäss dadurch gelöst, dass der Begasungseinrichtung eine Einrichtung zum Abhalten von Trägermaterialien zugeordnet ist, durch die Einrichtung zum Abhalten von Trägermaterialien ein Teil des Reaktors als trägermaterialfreie Zone abgetrennt ist und das Volumen der trägermaterialfreien Zone 10 bis 20% des Gesamtvolumens des Reaktors beträgt.

Mit dieser Vorrichtung wird erreicht, dass das Trägermaterial für die Biomasse von den bei der Begasung verwendeten Einrichtungen ferngehalten werden oder zumindest nicht in die Ansaugzone der Begasungseinrichtungen gelangen kann. Damit können Trägermaterialien auch in solchen Reaktoren eingesetzt werden, in denen eine Begasung beispielsweise unter Erzeugung hoher Scherkräfte durchgeführt wird, ohne dass durch die Scherkräfte die Trägerteilchen in ihrer Festigkeit vermindert werden.

Eine erfindungsgemäss eingesetzte Einrichtung kann beispielsweise ein einfaches Sieb, ein Maschen- oder Gitterwerk sein, wobei die jeweiligen Durchlassöffnungen kleiner sind als die kleinsten, zum Einsatz kommenden Trägerteilchen. Vorteilhafterweise ist bei Verwendung von Oberflächenbelüftern als Begasungseinrichtung die Einrichtung zum Abhalten von Trägermaterialien unterhalb der Oberflächenbelüfter angeordnet und seitlich der Oberflächenbelüfter bis zur Wasseroberfläche geführt. Dabei kann die Einrichtung zum Abhalten von Trägermaterialien durch am Reaktor oder an der Belüftungseinrichtung selbst abgestützte Halteelemente in ihrer Lage gehalten werden.

Vorteilhafterweise sind bei der Verwendung von Tauchbelüftern und/oder Injektoren als Begasungseinrichtungen diese ausserhalb der trägermaterialfreien Zone angeordnet und die Wasseransaugleitungen der Begasungseinrichtungen stehen mit der trägermaterialfreien Zone in Verbindung.

In der Zeichnung sind zwei Ausführungsbeispiele einer erfindungsgemässen Vorrichtung schematisch dargestellt.

Es zeigt:

Fig. 1 im Querschnitt einen Ausschnitt eines Umlaufgrabens mit Oberflächenbelüftern,

Fig. 2 im Querschnitt ein Belebungsbecken mit Injektoren oder Tauchbelüftern.

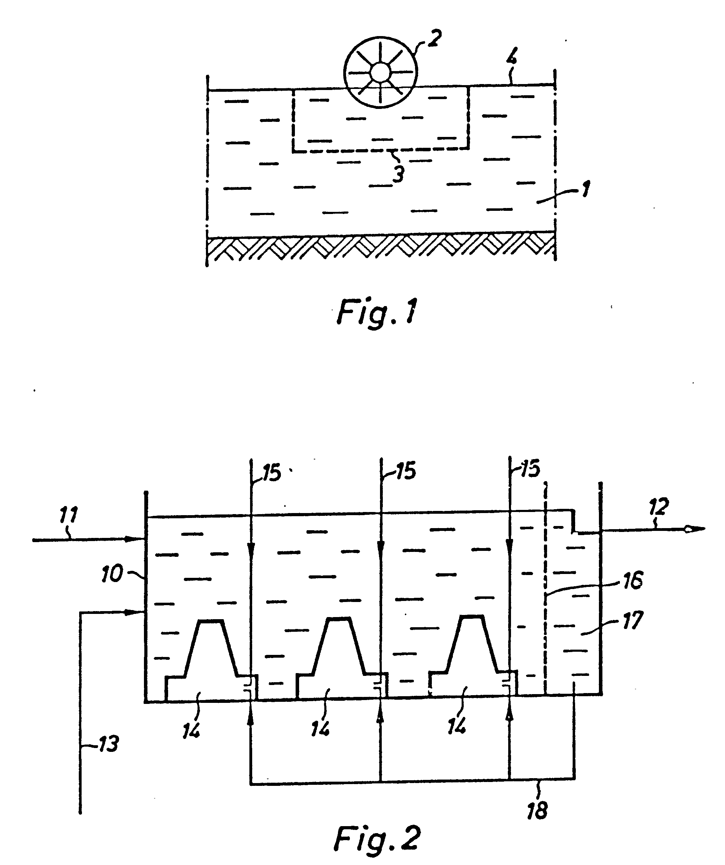

In der Figur 1 ist der Umlaufgraben mit 1 und der Oberflächenbelüfter, der als Kreisel- oder Mammutrotor ausgebildet sein kann, mit 2 bezeichnet. Im Umlaufgraben 1 sind zur Erhöhung der Schlammkonzentration Trägerteilchen 3 schwebend als Ansiedlungsfläche für die Biomasse angeordnet. Erfindungsgemäss ist unterhalb des Oberflächenbelüfters 2 als Einrichtung zum Abhalten von Trägermaterialien ein Schutzsieb 3 angeordnet, das seitlich des Oberflächenbelüfters 2 bis zur Wasseroberfläche 4 hochgezogen ist.

In der Figur 2 sind das Belebungsbecken mit 10 und die am Beckenboden angeordneten Tauchbelüfter oder Injektoren mit 14 bezeichnet. Am Belebungsbecken 10 sind eine Zuleitung 11 für zu behandelndes Abwasser, eine Ableitung 12 für behandeltes Abwasser sowie eine Schlammzuleitung 13 angeschlossen. Im Belebungsbecken 1 sind Trägerteilchen für die Biomasse vorzugsweise frei schwebend angeordnet. Den Tauchbelüftern oder Injektoren 14 ist jeweils eine Gaszuleitung 15 für Luft und/oder Sauerstoff zugeordnet. Erfindungsgemäss ist durch ein Trennsieb 16 im Belebungsbecken 1 eine trägerteilchenfreie Zone 17 mit einem Volumen von 10 bis 20% des gesamten Beckenvolumens abgetrennt, von der Wasseransaugleitungen 18 zu den einzelnen Tauchbelüftern oder Injektoren 14 geführt sind. Das Trennsieb 16 ist dabei vorzugsweise zu der Abschlusswand des Belebungsbeckens 1 benachbart angeordnet, in der die Ableitung 12 für behandeltes Abwasser angeschlossen ist, wodurch das Trennsieb 15 nicht nur die Trägerteilchen aus der Ansaugzone der Belüftungseinrichtungen 14 heraushält, sondern auch die Trägerteilchen vor einem Abtreiben in die Ableitung 12 bewahrt.

## Patentansprüche

1. Vorrichtung zur biologischen Reinigung von Abwasser mit einem Reaktor, der eine Zuleitung für zu behandelndes Abwasser, eine Ableitung für behandeltes Abwasser, eine Schlammzuleitung sowie mindestens eine Begasungseinrichtung aufweist und in dem die Biomasse auf einem Trägermaterial angesiedelt ist, dadurch gekennzeichnet, dass der Begasungseinrichtung (2, 14) eine Einrichtung (3, 16) zum Abhalten von Trägermaterialien zugeordnet ist, durch die Einrichtung (16) zum Abhalten von Trägermaterialien ein Teil des Reaktors (10) als trägermaterialfreie Zone abgetrennt ist und das Volumen der trägermaterialfreien Zone (17) 10 bis 20% des Gesamtvolumens des Reaktors (10) beträgt.

2. Vorrichtung nach Anspruch 1, dadurch gekennzeichnet, dass bei Verwendung von Oberflächenbelüftern (2) als Begasungseinrichtung die Einrichtung (3) zum Abhalten von Trägermaterialien unterhalb der Oberflächenbelüfter (2) angeordnet und seitlich der Oberflächenbelüfter (2) bis zur Wasseroberfläche (4) geführt ist.

3. Vorrichtung nach Anspruch 1, dadurch gekennzeichnet, dass bei Verwendung von Tauchbelüftern und/oder Injektoren (14) als Begasungseinrichtungen diese ausserhalb der trägermaterialfreien Zone angeordnet sind und die Wasseransaugleitungen (18) der Begasungseinrichtungen (14) mit der trägermaterialfreien Zone (17) in Verbindung stehen.

## Claims

1. Apparatus for the biological purification of waste water, comprising a reactor having a supply line for the waste water to be treated, a discharge line for treated waste water, a sludge supply line and at least one aerating device and wherein the bio-mass settles on a carrier material, characterised in that the aerating device (2, 14) is assigned means (3, 16) for restraining carrier material, a section of the reactor (10) is separated to form a zone free from carrier material by the means (16) for restraining carrier material, and the volume of the zone (17) which is free from carrier material, is 10 to 20% of the total volume of the reactor (10).

2. Apparatus as claimed in Claim 1, characterised in that when using surface ventilators (2) as the aerating devices, the means (3) for restraining carrier material is arranged below the surface ventilators (2) and is led to the water surface (4) at the side of the surface ventilators (2).

3. Apparatus as claimed in Claim 1, characterised in that when using immersion ventilators and/or injectors (14) as aerating devices, the former are arranged outside the zone which is free from carrier material and the water suction pipes (18) of the aerating devices (14) are connected to the zone (17) which is free from carrier material.

## Revendications

1. Dispositif pour l'épuration biologique d'eaux résiduaires avec un réacteur qui comporte une conduite d'amenée pour les eaux résiduaires à traiter, une conduite de décharge pour les eaux résiduaires traitées, une conduite d'amenée de boues ainsi qu'au moins un dispositif d'aération et dans lequel la biomasse est ensemencée sur un matériau de support, caractérisé en ce qu'au dispositif d'aération (2, 14) est adjoint un dispositif (3, 16) pour la retenue des matériaux de support, une partie du réacteur (10) étant isolée comme zone exempte de matières de support pour former le dispositif (16) pour la retenue des matières de support et le volume de la zone exempte de matériaux de support (17) représentant 10 à 20% du volume total du réacteur (10).

2. Dispositif selon la revendication 1, caractérisé en ce qu'en cas d'emploi, comme dispositif d'aération, d'aérateurs superficiels (2), le dispositif (3) pour la retenue des matériaux de support est disposé sous l'aérateur superficiel (2) et s'étend de chaque côté de l'aérateur superficiel (2) jusqu'à la surface (4) de l'eau.

3. Dispositif selon la revendication 1, caractérisé en ce qu'en cas d'emploi d'aérateurs immergés et/ou injecteurs (14) comme dispositif d'aération, ceux-ci sont disposés à l'extérieur de la zone exempte de matériau de support et les conduites d'aspiration d'eau (18) du dispositif d'aération (14) sont reliées à la zone (17) exempte de matériaux de support.

Fig. 1

Fig. 2